# EUROPÄISCHE PATENTSCHRIFT

(11) **EP 0 780 272 B1**
(45) Veröffentlichungstag und Bekanntmachung des Hinweises auf die Patenterteilung: **19.05.1999**
(21) Anmeldenummer: 96119448.7
(22) Anmeldetag: 04.12.1996
(51) Int. Cl.: B60R 22/46

(54) **Linearantrieb für einen Gurtstraffer**
Linear drive for a belt tensioner
Entraînement linéaire pour un tendeur de ceinture de sécurité

(30) Priorität: 21.12.1995 DE 29520307 U
(43) Veröffentlichungstag der Anmeldung: 25.06.1997
(73) Patentinhaber: TRW Occupant Restraint Systems GmbH & Co. KG, 73551 Alfdorf (DE)
(72) Erfinder: Schmid, Johannes, 73527 Schwäbisch Gmünd (DE)
(74) Vertreter: Degwert, Hartmut, Dipl.-Phys.

(56) Entgegenhaltungen:
- EP-A- 0 649 779
- DE-A- 4 227 781
- DE-A- 4 415 103

## Beschreibung

Die Erfindung betrifft einen Linearantrieb für einen Gurtstraffer, mit einem Zylinderrohr, einem in diesem verschiebbar angeordneten Kolben, der einen hohlen Innenraum und an einem axialen Ende eine Stirnwand aufweist, und einer pyrotechnischen Treibladung, die nach ihrer Zündung den Innenraum des Kolbens mit unter Druck stehendem Gas beaufschlagt.

Ein solcher Linearantrieb ist aus der DE-OS-44 15 103, die einen Linearantrieb nach dem Oberbergriff des Anspruches 1 beschriebt, bekannt. Im Bedarfsfall wird die Treibladung gezündet, so daß der Kolben unter der Wirkung des erzeugten Gases einen Straffhub ausführt, der von dem Gurtstraffer in eine Drehung einer Gurtspule eines Gurtaufrollers in der Aufwickelrichtung umgesetzt wird. Dadurch wird die sogenannte Gurtlose aus dem Gurtsystem herausgezogen, damit der Fahrzeuginsasse bei einem Unfall möglichst früh an der Fahrzeugverzögerung teilnimmt.

Ein Problem bei einem solchen Linearantrieb besteht darin zu gewährleisten, daß auch bei einer Zündung der Treibladung unter ungünstigsten Umständen, z.B. bei Mißbrauch, Überhitzung durch Fahrzeugbrand oder wenn der Fahrzeuginsasse bereits eine Verlagerung nach vorne ausführt, keinerlei Gefährdung von der Treibladung und dem Linearantrieb ausgeht. Aus der eingangs genannten DE-OS-44 15 103 ist bekannt, das Zylinderrohr berstsicher auszubilden, so daß auch bei einer Zündung im ungünstigsten Fall keinerlei Gefährdung von der Treibladung ausgeht. Eine solche Ausgestaltung ist allerdings mit Gewichtsnachteilen verbunden.

Die Aufgabe der Erfindung besteht darin, einen Linearantrieb der eingangs genannten Art dahingehend weiterzubilden, daß bei verringertem Gewicht des Linearantriebes eine vollständige Sicherheit gegen Bersten des Zylinderrohres erreicht wird.

Zu diesem Zweck ist ein Linearantrieb der eingangs genannten Art dadurch gekennzeichnet, daß die Stirnwand eine Durchgangsöffnung aufweist, die auf der Seite des Innenraumes durch eine Berstscheibe abgedeckt ist. Die Berstscheibe gibt bei einem übermäßig hohen Druck im Innenraum des Kolbens die Durchgangsöffnung frei, so daß dieser Druck aus dem Innenraum des Kolbens entweichen kann und ein Bersten des Zylinderrohres verhindert ist, ohne daß dieses besonders kräftig ausgelegt sein muß. Durch die Dimensionierung der Berstscheibe kann dabei der maximal im Innenraum des Kolbens auftretende Druck eingestellt und an die jeweiligen Verhältnisse angepaßt werden.

Gemäß einer bevorzugten Ausführungsform der Erfindung ist die Berstscheibe mit einer kalibrierten Ausströmöffnung versehen, die der Durchgangsöffnung gegenüberliegt. Diese Ausgestaltung bietet neben einer Begrenzung des im Innenraum des Kolbens maximal auftretenden Drucks besondere Vorteile hinsichtlich des Verhaltens des Linearantriebes nach einer erfolgten Gurtstraffung, wenn die Gurtspule mit einem Energieaufnahmemittel wie einem Torsionsstab verbunden ist, welches Lastspitzen im Gurtsystem aufnimmt. Ein solches Energieaufnahmemittel ist in der DE-OS-42 27 781 beschrieben. Wenn die Gurtspule nach erfolgter Gurtstraffung, also nachdem der Kolben nach Zündung der Treibladung seinen Straffhub ausgeführt hat, in der Abwickelrichtung und entgegen der Wirkung des Energieaufnahmemittels gedreht wird, kommt es aufgrund der Kopplung der Gurtspule mit dem Linearantrieb zu einer Rückbewegung des Kolbens des Linearantriebes in Richtung seiner Ausgangsstellung. Durch die Ausströmöffung ist gewährleistet, daß sich bei der Rückbewegung des Kolbens in dessen Innenraum kein Gasdruck aufbauen kann, der dieser Rückbewegung entgegenwirkt. Zwar führt die Ausströmöffnung auch zu Druckverlusten beim Straffhub des Kolbens; da jedoch die Rückbewegung des Kolbens im Vergleich zum Straffhub sehr langsam abläuft, reicht eine vergleichsweise kleine Ausströmöffnung für ein Entlüften des Innenraumes des Kolbens bei dessen Rückbewegung aus, so daß die Druckverluste beim sehr schnellen Straffhub des Kolbens gering sind. Außerdem können diese Druckverluste durch eine größere Treibladung kompensiert werden.

Gemäß einer bevorzugten Ausführungsform der Erfindung kann die Berstscheibe im Innenraum verpreßt sein. Auf diese Weise wird eine besonders einfache Festlegung der Berstscheibe im Innenraum des Kolbens erzielt.

Gemäß einer Alternative zur Ausführungsform mit verpreßter Berstscheibe kann die Berstscheibe mit einem hohlzylindrischen Befestigungsfortsatz versehen sein, der die Durchgangsöffnung durchgreift und die Berstscheibe an der Stirnwand mittels eines umgebördelten Randes festlegt. Auf diese Weise wird eine besonders sichere Festlegung der Berstscheibe an der Stirnwand erzielt.

Bei einer bevorzugten weiteren Ausführungsform der Erfindung ist vorgesehen, daß die Berstscheibe mit einem die Durchgangsöffnung durchragenden Anschlußteil versehen ist, das mit einem an der Innenwandung des Zylinderrohres angreifenden Abreißteil verbunden ist, welches in dem Zylinderrohr in einer Richtung entsprechend der Bewegungsrichtung des Kolbens bei Zündung der Treibladung verschiebbar ist, sich jedoch bei einer Bewegung des Kolbens in der entgegengesetzten Richtung in dem Zylinderrohr festsetzt und bei fortgesetzter Bewegung des Kolbens das Anschlußteil von der Berstscheibe abreißt, wobei die Durchgangsöffnung freigegeben wird. Mit einer solchen Ausgestaltung lassen sich die gleichen vorteilhaften Wirkungen hinsichtlich einer Rückbewegung des Kolbens in die Ausgangsstellung nach erfolgtem Straffhub erzielen, wie sie auch durch eine kalibrierte Ausströmöffnung in der Berstscheibe erreichbar sind; jedoch kommt es bei dieser Ausführungsform zu keinerlei Verlusten während des Straffhubes.

Vorzugsweise ist die Berstscheibe durch eine Metallfolie gebildet. Dies ergibt eine hohe Reproduzierbarkeit der Druckwerte, bei denen es zur Freigabe der Durchgangsöffnung kommt, da eine solche Metallfolie mit geringen Toleranzen hergestellt werden kann und hinsichtlich des maximal von ihr ertragenen Drucks kaum auf Temperaturänderungen anspricht.

Die Erfindung wird nachfolgend unter Bezugnahme auf bevorzugte Ausführungsformen beschrieben, die in der beigefügten Zeichnung dargestellt sind. In dieser zeigen:
Figur 1 schematisch einen erfindungsgemäßen Linearantrieb mit einem Gurtstraffer und einem Gurtaufroller;
Figur 2 schematisch einen Schnitt durch einen erfindungsgemäßen Linearantrieb gemäß einer ersten Ausführungsform in der Ausgangsstellung;
Figur 3 schematisch einen Schnitt durch den Linearantrieb von Figur 2 nach erfolgtem Straffhub;
Figur 4 eine vergrößerte Teilansicht des Linearantriebes von Figur 2;
Figur 5 eine Ansicht entsprechend derjenigen von Figur 4 einer zweiten Ausführungsform der Erfindung;
Figur 6 eine Ansicht entsprechend derjenigen von Figur 4 einer dritten Ausführungsform der Erfindung;
Figur 7 eine Ansicht entsprechend derjenigen von Figur 4 einer vierten Ausführungsform der Erfindung in der Ausgangsstellung; und
Figur 8 einen schematischen Schnitt durch den Linearantrieb gemäß der vierten Ausführungsform nach erfolgtem Straffhub und erfolgter Rückbewegung des Kolbens in die Ausgangsstellung.

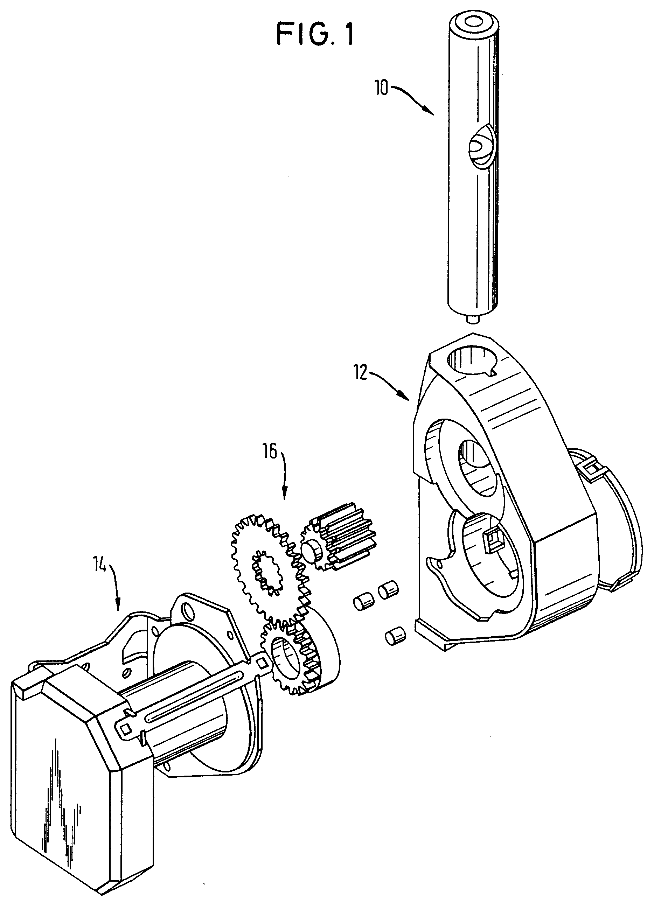

In Figur 1 sind in einer Explosionsansicht ein erfindungsgemäßer Linearantrieb 10 sowie ein zugehöriger Gurtstraffer 12 und ein Gurtaufroller 14 dargestellt, an welchem der Gurtstraffer 12 mittels eines Übersetzungsgetriebes 16 angreift.

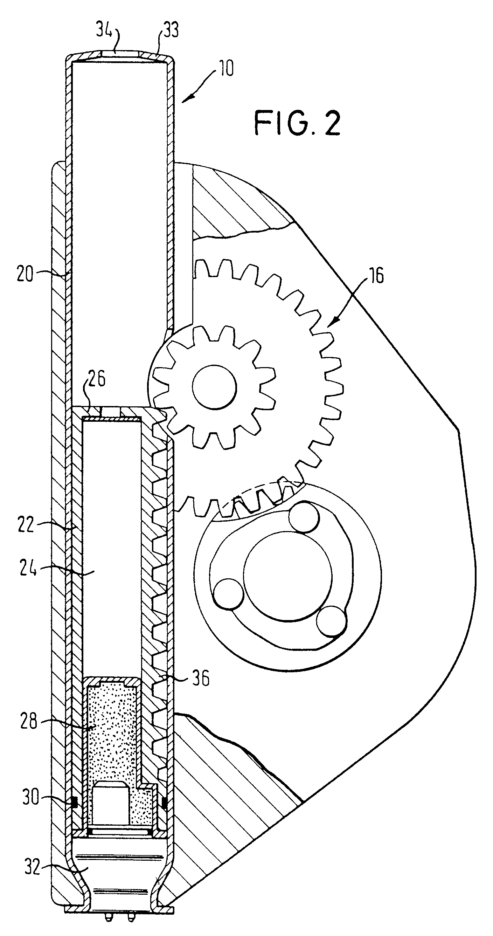

Wie in Figur 2 zu sehen ist, besteht der Linearantrieb 10 aus einem Zylinderrohr 20 und einem in diesem verschiebbar angeordneten Kolben 22. Der Kolben 22 weist einen hohlen Innenraum 24 auf, der an einem axialen Ende eine Stirnwand 26 und an dem entgegengesetzten axialen Ende eine pyrotechnische Treibladung 28 aufweist. Zwischen dem Zylinderrohr 20 und dem Kolben 22 ist an diesem ein Dichtring 30 angeordnet. An seinem bezüglich Figur 2 unteren Ende ist das Zylinderrohr 22 durch einen Verschlußstopfen 32 verschlossen, der auch die Zündkontakte für eine Zündung der Treibladung 28 trägt. An seinem entgegengesetzten Ende ist das Zylinderrohr 20 mit einer Kolbenfangsicherung 33 mit Öffnung 34 versehen. Die Öffnung 34 dient für eine Entlüftung des Zylinderrohres 20 bei einem Straffhub des Kolbens 22.

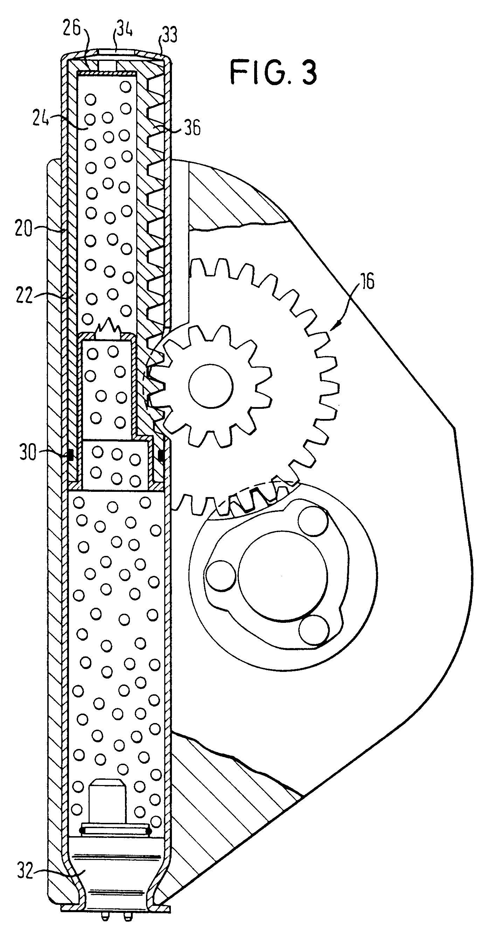

Der Kolben 22 weist auf seiner Mantelfläche eine sich parallel zur Längsachse des Kolbens 22 erstreckende Verzahnung 36 auf, die mit einem Zahnrad des Getriebes 16 zusammenwirken kann, um einen Straffhub des Kolbens 22 in eine Rotationsbewegung umzusetzen, welche als eine Drehung in der Gurtbandaufwickelrichtung auf die Gurtspule des Gurtaufrollers 14 übertragen wird. Ein solcher Straffhub wird ausgelöst, indem die Treibladung 28 gezündet wird. Diese erzeugt ein unter Druck stehendes Gas, welches den Innenraum des Kolbens beaufschlagt und zu einer Verlagerung des Kolbens 22 im Zylinderrohr 20 führt. In Figur 3 ist der Zustand des Linearantriebes nach einem ausgeführten Straffhub dargestellt. Für eine ausführlichere Beschreibung eines solchen Gurstraffermechanismus wird auf die eingangs genannte DE-OS-4415 103 verwiesen.

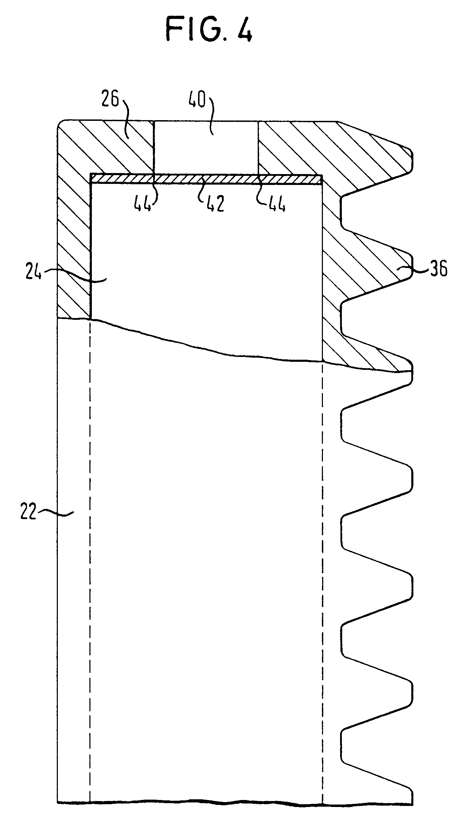

In Figur 4 ist eine vergrößerte Ansicht des stirnwandseitigen Endes des Kolbens 22 gemäß einer ersten Ausführungsform der Erfindung dargestellt. Die Stirnwand weist eine sich in der Längsrichtung des Kolbens erstreckende Durchgangsöffnung 40 auf. An der Stirnwand ist auf der Seite des Innenraumes eine Berstscheibe 42 angebracht, welche die Durchgangsöffnung 40 verschließt. Die Berstscheibe 42 ist mit Sollbruchstellen 44 versehen, so daß gewährleistet ist, daß oberhalb eines vorbestimmten Maximaldrucks im Innenraum 24 des Kolbens 22 die Durchgangsöffnung 40 freigegeben wird und der Druck aus dem Innenraum des Kolbens 22 entweichen kann. Auf diese Weise ist sichergestellt, daß auch bei einer Zündung der Treibladung im ungünstigsten Fall, beispielsweise bei in der Ausgangsstellung blockiertem Kolben 22, kein übermäßig hoher Gasdruck im Inneren des Kolbens 22 entstehen kann, der zu einer Gefahr des Berstens des Linearantriebes führt.

Die Berstscheibe 42 besteht aus einer in den Kolben eingepreßten Metallfolie. Durch die Verwendung einer Metallfolie ergibt sich eine hohe Reproduzierbarkeit der Druckwerte, bei denen es zu einer Freigabe der Durchgangsöffnung 40 kommt, da eine solche Metallfolie mit sehr geringen Toleranzen hergestellt werden kann und außerdem kaum auf Temperaturänderungen anspricht. Ferner kommt es bei einer aus einer Metallfolie bestehenden Berstscheibe zu keinerlei Absplitterung von Teilen, wenn die Durchgangsöffnung freigegeben wird. Da der Innenraum des Kolbens 22 zum einen durch die Berstscheibe 42 und zum anderen durch den Dichtungsring 30 vollständig abgedichtet ist, wird der gesamte von der Treibladung erzeugte Gasdruck optimal in einen Straffhub umgesetzt.

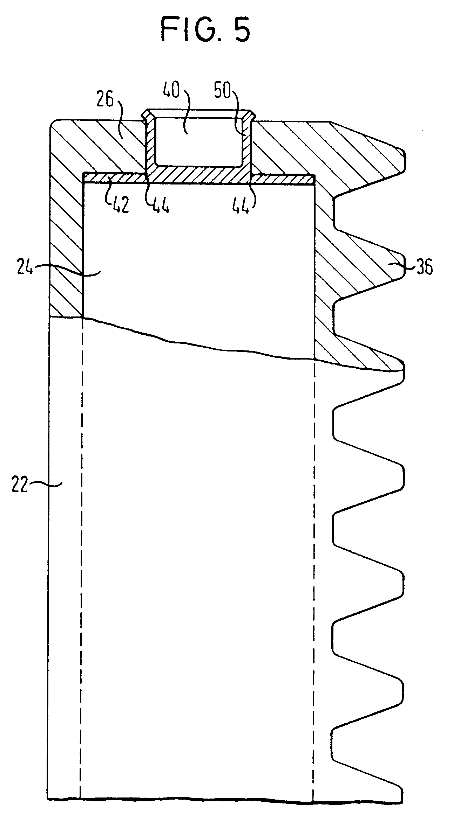

In Figur 5 ist eine vergrößerte Ansicht des stirnwandseitigen Endes des Kolbens 22 gemäß einer zweiten Ausführungsform der Erfindung dargestellt. Die aus einer Metallfolie bestehende Berstscheibe 42 ist mit einem hohlzylindrischen Befestigungsfortsatz 50 versehen, der die Durchgangsöffnung durchgreift und dessen freies axiales Ende auf der Außenseite der Stirnwand umgebördelt ist. Auf diese Weise ist die Berstscheibe 42 sicher an der Stirnwand 26 festgelegt. Auch bei dieser Ausführungsform ist die Berstscheibe 42 mit Sollbruchstellen 44 versehen, so daß die Berstscheibe 42 bei einem übermäßig hohen Druck im Innenraum des Kolbens 22 die Durchgangsöffnung 40 freigibt.

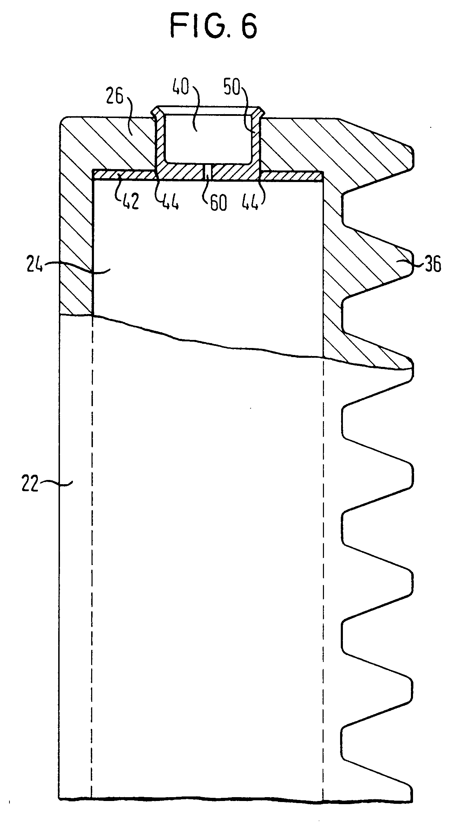

In Figur 6 ist eine vergrößerte Ansicht des stirnwandseitigen Endes des Kolbens 22 gemäß einer dritten Ausführungsform der Erfindung dargestellt. Die Berstscheibe 42 entspricht weitestgehend der Berstscheibe aus Figur 5; zusätzlich weist die Berstscheibe 42 gemäß der dritten Ausführungsform eine kalibrierte Ausströmöffnung 60 auf, welche den Innenraum 24 des Kolbens 22 mit der Durchgangsöffnung und folglich dem Außenraum des Kolbens verbindet und vorzugsweise einen Durchmesser in der Größenordnung von 0,5 mm aufweist. Diese Ausströmöffnung 60 ist permanent geöffnet; jedoch sind aufgrund des kleinen Durchmessers der Ausströmöffnung 60 die bei einem Straffhub des Kolbens 22 auftretenden Druckverluste vergleichsweise gering. Sie können durch eine vergrößerte Treibladung kompensiert werden. Die Funktion der kalibrierten Ausströmöffnung 60 besteht darin, einen Druckausgleich zwischen dem Innenraum 24 des Kolbens 22 und dem Innenraum des Zylinderrohres 20 zu ermöglichen, wenn nach erfolgtem Straffhub der Kolben 22 wieder zurück in seine Ausgangsstellung bewegt werden soll. Durch den Druckausgleich zwischen dem Innenraum 24 des Kolbens 22 und dem Innenraum des Zylinderrohres 20 kann sich im Innenraum 24 des Kolbens kein Gasdruck aufbauen, der einer Rückbewegung des Kolbens 22 in die Ausgangsstellung entgegenwirkt, so daß trotz der Kopplung der Gurtspule des Gurtaufrollers mit dem Linearantrieb Gurtband von der Gurtspule abgezogen werden kann.

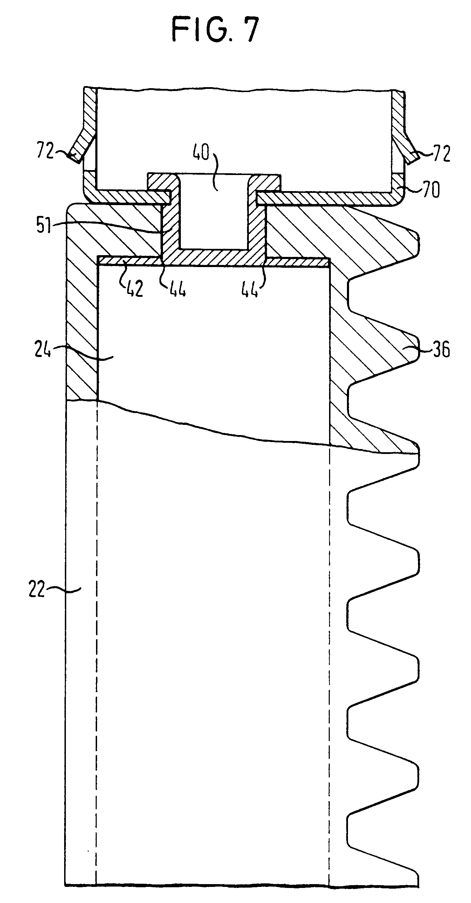

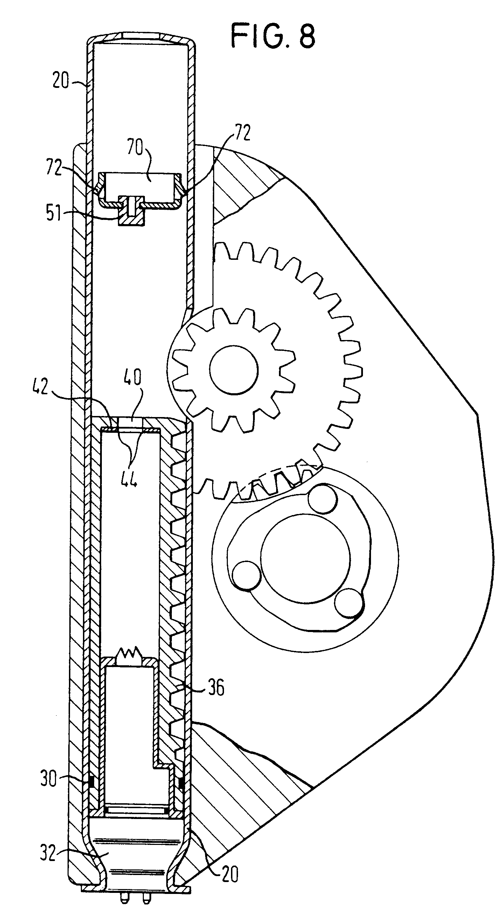

In den Figuren 7 und 8 sind das stirnwandseitige Ende des Kolbens eines Linearantriebes gemäß einer vierten Ausführungsform bzw. dieser Linearantrieb in einem schematischen Schnitt dargestellt. Die Berstscheibe 42 entspricht weitestgehend derjenigen der zweiten Ausführungsform; anstelle des Befestigungsfortsatzes ist hier allerdings ein Anschlußteil 51 vorgesehen, an dem ein Abreißteil 70 angreift, welches mit an der Innenwandung des Zylinderrohres 20 angreifenden Sperrlaschen 72 versehen ist. Diese Sperrlaschen sind so angestellt, daß sie eine Verschiebung des Abreißteils 70 in einer Richtung entsprechend der Bewegungsrichtung des Kolbens bei Zündung der Treibladung ermöglichen, sich jedoch bei einer Bewegung des Kolbens in der entgegengesetzten Richtung in dem Zylinderrohr festsetzen. Dies führt dazu, daß bei einer Rückbewegung des Kolbens 22 nach einem Straffhub in die Ausgangsstellung sich das Abreißteil 70 im Zylinderrohr 20 verkeilt und das Anschlußteil 51 von der Berstscheibe 42 abreißt. Damit wird die Durchgangsöffnung 40 freigegeben, und der Kolben 22 kann zurück in seine Ausgangsstellung bewegt werden, ohne daß sich in seinem Innenraum 24 ein dieser Rückbewegung entgegenwirkender Gasdruck aufbaut. Die Ausgestaltung des Linearantriebes gemäß der vierten Ausführungsform bietet gegenüber der Ausgestaltung gemäß der dritten Ausführungsform den Vorteil, daß es unterhalb des durch die Dimensionierung der Sollbruchstellen 44 vorgegebenen Maximaldrucks zu keinerlei Druckverlusten nach einer Zündung der Treibladung 28 kommt, da der Innenraum 24 des Kolbens 22 zum einen durch die Berstscheibe 42 und zum anderen durch den Dichtungsring 30 vollständig abgedichtet ist.

## Patentansprüche

1. Linearantrieb (10) für einen Gurtstraffer, mit einem Zylinderrohr (20),
einem in diesem verschiebbar angeordneten Kolben (22), der einen hohlen Innenraum (24) und an einem axialen Ende eine Stirnwand aufweist,
und einer pyrotechnischen Treibladung (28), die nach ihrer Zündung den Innenraum (24) des Kolbens (22) mit unter Druck stehendem Gas beaufschlagt,
dadurch gekennzeichnet,
daß die Stirnwand (26) eine Durchgangsöffnung (40) aufweist, die auf der Seite des Innenraumes (24) durch eine Berstscheibe (42) abgedeckt ist.

2. Linearantrieb nach Anspruch 1, dadurch gekennzeichnet, daß die Berstscheibe (42) im Innenraum (24) des Kolbens (22) verpreßt ist.

3. Linearantrieb nach Anspruch 1, dadurch gekennzeichnet, daß die Berstscheibe (42) mit einem hohlzylindrischen Befestigungsfortsatz (50) versehen ist, der die Durchgangsöffnung (40) durchgreift und die Berstscheibe (42) an der Stirnwand (26) mittels eines umgebördelten Randes festlegt.

4. Linearantrieb nach Anspruch 1, dadurch gekennzeichnet, daß die Berstscheibe (42) mit einem die Durchgangsöffnung (40) durchragenden Anschlußteil (51) versehen ist, das mit einem an der Innenwandung des Zylinderrohres (20) angreifenden Abreißteil (70) verbunden ist, welches in dem Zylinderrohr (20) in einer Richtung entsprechend der Bewegungsrichtung des Kolbens (22) bei Zündung der Treibladung (28) verschiebbar ist, sich jedoch bei einer Bewegung des Kolbens (22) in der entgegengesetzten Richtung in dem Zylinderrohr (20) festsetzt und bei fortgesetzter Bewegung des Kolbens (22) das Anschlußteil (51) von der Berstscheibe (42) abreißt, wobei die Durchgangsöffnung (40) freigegeben wird.

5. Linearantrieb nach einem der Ansprüche 1 bis 3, dadurch gekennzeichnet, daß die Berstscheibe (42) mit einer kalibrierten Ausströmöffnung (60) versehen ist, die der Durchgangsöffnung (42) gegenüberliegt.

6. Linearantrieb nach einem der vorhergehenden Ansprüche, dadurch gekennzeichnet, daß die Berstscheibe (42) durch eine Metallfolie gebildet ist.

## Claims

1. A linear drive (10) for a belt pretensioner, comprising a cylinder tube (20),
a piston (22) arranged for sliding motion therein, said piston possessing a hollow interior space (24) and an end wall at one axial end,
and a pyrotechnic drive charge (28), which after being fired causes the interior space (24) of the piston (22) to be subjected to gas under pressure,
characterized in that
the end wall (26) possesses a passage opening (40), which on the interior space (24) side is closed by a blow-out patch (42).

2. The linear drive as claimed in claim 1, characterized in that the blow-out patch (42) is press-fitted in the interior space (24) of the piston (22).

3. The linear drive as claimed in claim 1, characterized in that the blow-out patch (42) is provided with a tubular skirt (50), which extends through the passage opening (40) and secures the blow-out patch (42) in place on the end wall (26) by means of a crimped over edge.

4. The linear drive as claimed in claim 1, characterized in that the blow-out patch (42) is provided with a connection part (51) extending through the passage opening (40) and which is connected with a tear-off part (70) in engagement with the interior wall surface of the cylinder tube (20), which tear-off part (70) is adapted to be shifted in the cylinder tube (20) in a direction corresponding to the direction of movement of the piston (22) on firing of the drive charge (28) while however locking in the cylinder tube (20) in the case of a movement of the piston (22) in the opposite direction and on continued movement of the piston (22) tears off the connection part (51) from the blow-out patch (42), the passage opening (40) being cleared.

5. The linear drive as claimed in any one of the claims 1 through 3, characterized in that the blow-out patch (42) is provided with a calibrated discharge opening (60), which is facing the passage opening (42).

6. The linear drive as claimed in any one of the preceding claims, characterized in that the blow-out patch (42) is constituted by a metallic foil.

## Revendications

1. Mécanisme d'entraînement linéaire (10) pour un tendeur de ceinture, avec un tube cylindrique (20), un piston (22), disposé de façon à pouvoir coulisser dans. celui-ci, piston (22) qui présente un espace creux intérieur (24) et une paroi frontale à une extrémité dans le sens de l'axe, et une charge propulsive pyrotechnique (28) qui, après sa mise à feu, alimente l'intérieur (24) du piston (22) en gaz sous pression, caractérisé en ce que la paroi frontale (26) présente une ouverture de passage (40), qui est recouverte sur le côté de l'espace intérieur (24) par un disque de rupture (42).

2. Mécanisme d'entraînement linéaire selon la revendication 1, caractérisé en ce que le disque de rupture (42) est pressé dans l'espace intérieur (24) du piston (22).

3. Mécanisme d'entraînement linéaire selon la revendication 1, caractérisé en ce que le disque de rupture (42) est pourvu d'un prolongement de fixation (50) cylindrique creux, qui passe à travers l'ouverture de passage (40) et fixe le disque de rupture (42) à la paroi frontale (26) au moyen d'un bord replié.

4. Mécanisme d'entraînement linéaire selon la revendication 1, caractérisé en ce que le disque de rupture (42) est pourvu d'une pièce de raccordement (51), qui pénètre à travers l'ouverture de passage (40), et qui est reliée à une pièce d'arrachement (70), venant en prise sur la paroi intérieure du tube cylindrique (20), pièce d'arrachement (70) qui peut coulisser dans le tube cylindrique (20) dans un sens correspondant au sens du mouvement du piston (22) lors de la mise à feu de la charge propulsive (28), se bloque toutefois lors d'un mouvement du piston (22) dans le sens opposé dans le tube cylindrique (20) et arrache, lors de la poursuite du mouvement du piston (22), la pièce de raccordement (51) du disque de rupture (42), en libérant l'ouverture de passage (40).

5. Mécanisme d'entraînement linéaire selon l'une des revendications 1 à 3, caractérisé en ce que le disque de rupture (42) est pourvu d'une ouverture d'écoulement de sortie (60), calibrée, qui se trouve en regard de l'ouverture de passage (42).

6. Mécanisme d'entraînement linéaire selon l'une des revendications précédentes, caractérisé en ce que le disque de rupture (42) est formé par une feuille de métal.
